# EUROPEAN PATENT APPLICATION

(11) **EP 2 064 965 A1**
(43) Date of publication of application: **03.06.2009**
(21) Application number: 07121674.1
(22) Date of filing: 27.11.2007
(51) Int. Cl.: A43B 13/12, B32B 27/34

(54) **Piercing resistive planar member**

(71) Applicant: Wellmax Products Co., Ltd., South District Taichung City (TW)
(72) Inventor: Lin, Jiun-Yeh, Taichung City (TW); Shen, Chun-Ching, Taichung-City (TW)
(74) Representative: Viering, Jentschura & Partner

(57) **Abstract**

A planar member (10) includes two or more planar layers (13) secured together, the planar layers each has a basic layer (14), and an acrylic resin layer (15) engaged onto an outer portion of the basic layer for securing the basic layers together. The basic layer may be selected from Nylon 4, Nylon 6, Nylon 11, Nylon 66, Nylon 610, or the combination, one or more reinforcing layers (41) may be engaged between the planar layers, and the proportion of the planar layers to the reinforcing layer is equal to or greater than three. The reinforcing layer may be made of polyethylene terephthalate materials, polybutylene terephthalate materials, polytrimethylene terephthalate materials, or the combination.

## Description

The invention relates to an anti-piercing or piercing resistive planar member and a method for making the planar member, and more particularly to an anti-piercing or piercing resistive planar member having good flexibility for anti-piercing purposes, and for making various objects and for protecting the user and for preventing the user from being pierced by needles or other piercing objects.

Typical safety shoes comprise a front cover made of steel and engaged in a bag formed between a vamp section and a toe lining for protecting the feet of the user and for preventing the feet of the user from being pierced by needles or other piercing objects or from being hammered by heavy objects.

For example, U.S. Patent No. 4,597,199 to Hong discloses one of the typical safety shoes comprising a steel cover engaged in the front portion of a shoe and made of case harden steel material for preventing the feet of the user from being hammered by heavy objects, and a steel plate engaged into the bottom portion of the shoe for preventing the feet of the user from being pierced by needles or other piercing objects.

However, the steel plate and the steel cover are heavy and may not be bent or deformed or manufactured and thus may not be easily used to making various objects.

U.S. Patent No. 5,736,167 to Chang discloses another typical safety shoe making device also comprising a steel plate engaged into the bottom portion of the shoe for preventing the feet of the user from being pierced by needles or other piercing objects, and a steel toe protector engaged in the front portion of the shoe for preventing the feet of the user from being hammered by heavy objects plate.

However, similarly, the steel plate and the steel cover are heavy and may not be bent or deformed or manufactured and thus may not be easily used to making various objects.

To protect the feet from being hurt by needles or piercing objects, typical safety shoes often contain thick metal materials. For example, U.S. Patent No. 5,736,167 to Chang discloses one regular safety shoe comprising a steel bottom for preventing the feet from being pierced by sharp objects such as nails. Although thick metal bottom is effective for anti-piercing purposes, the heavy weight of the steel bottom makes walking difficult.

Moreover, the steel bottom lacks the flexibility or may not be bent, or the steel bottom may be recovered or bounced back right away to the original planar structure after bending such that the user may be quickly tired and may feel uncomfortable, and the ankles of the users may be twisted easily.

The invention has arisen to mitigate and/or obviate the afore-described disadvantages of the conventional planar members for making objects.

It is accordingly an object of the present invention to provide an anti-piercing planar member for making various objects and for protecting the user and for preventing the user from being pierced by needles or other piercing objects.

### SUMMARY OF THE INVENTION

According to the invention there is provided a planar member comprising:-
a first planar layer and at least one second planar layer secured together, the first planar layer and the second planar layer each including a basic layer, and an acrylic resin layer engaged onto an outer portion of the basic layer for allowing the basic layers to be secured together with the acrylic resin layer by such as hot-pressing processes.

The planar layers each include a thickness arranged between 0.4mm to 0.7mm, and the planar member includes a thickness arranged between 0.8mm to 5mm. The planar member may include an anti-piercing strength more than 30kg.

The basic layer is formed by a fiber cloth which is made of poly amide materials and selected from Nylon 4, Nylon 6, Nylon 11, Nylon 66, Nylon 610, or the combination thereof.

A bottom layer and/or an upper layer may be engaged with the acrylic resin layer for covering the acrylic resin layer and for preventing the acrylic resin layer from being engaged with the skin of the user.

One or more reinforcing layers may further be provided and engaged between the first and the second planar layers. A proportion of a number of the planar layers to a number of the reinforcing layer is equals to or greater than three (3).

The reinforcing layer is formed by a fiber cloth which is made of polyethylene terephthalate materials, polybutylene terephthalate materials, polytrimethylene terephthalate materials, or the combination thereof.

According to the invention there is further provided a method for making a planar member comprising:
providing a basic layer made of poly amide materials,
engaging the basic layer through an acrylic resin for applying the acrylic resin onto the basic layer and for forming a sheet material,
cutting the sheet material into a first planar layer and at least one second planar layer,
hot-pressing and securing the first planar layer and the second planar layer together for forming the planar member.

Further objectives and advantages of the invention will become apparent from a careful reading of the detailed description provided hereinbelow, with appropriate reference to the accompanying drawings.

### BRIEF DESCRIPTION OF THE DRAWINGS

FIG. 1 is a partial cross sectional view of a planar member;
FIG. 2 is an exploded view of the planar member;
FIG. 3 is an enlarged partial cross sectional view of the planar member;
FIG. 4 is a plan view illustrating the formation of the planar member;
FIG. 5 is a perspective view of a sheet material for making the planar member;
FIG. 6 is a partial exploded view illustrating the formation of the planar member;
FIG. 7 is a partial cross sectional view similar to FIG. 1, illustrating the other arrangement of the planar member; and
FIG. 8 is an enlarged partial cross sectional view of the planar member as shown in FIG. 7.

### DESCRIPTION OF THE PREFERRED EMBODIMENT

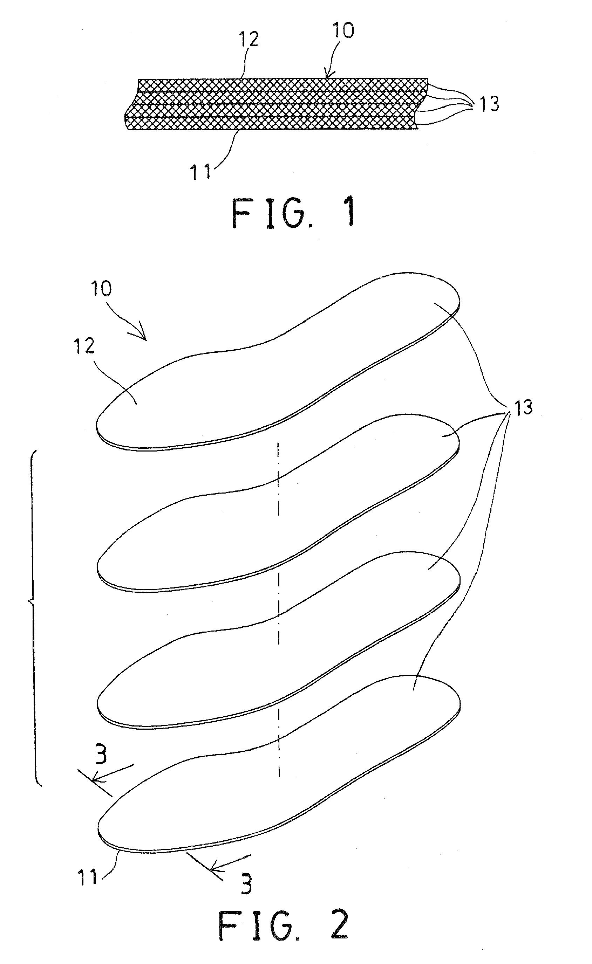

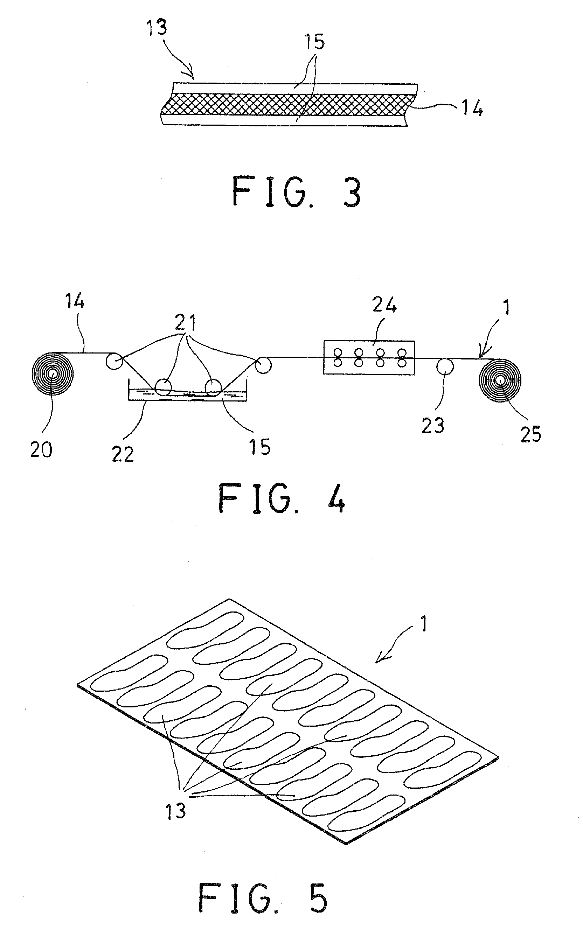

Referring to FIGS. 1 and 2, a planar member 10 comprises a bottom surface or layer 11, an upper surface or layer 12, and comprises one or more (such as four) planar layers 13 secured together for making various objects, such as shoe soles (FIGS. 2, 5) and for protecting the user and for preventing the feet of the user from being pierced by needles or other piercing objects. As s shown in FIGS. 3-5, the planar layers 13 each may include a basic layer 14 formed by such as a fiber cloth which is made of poly amide materials that may be selected from Nylon 4, Nylon 6, Nylon 11, Nylon 66, Nylon 610, or the combination thereof, and two acrylic resin layers 15 applied or attached or engaged onto the outer portion of the basic layer 14 (FIG. 3).

The basic layer 14 may be engaged on a roll 20, and engaged over one or more rollers 21 for sending the basic layer 14 through a container 22 which contains the acrylic resin 15 that may be applied or attached or engaged onto the outer portion of the basic layer 14, the basic layer 14 and the acrylic resin layers 15 may then be engaged over one or more further rollers 23 for sending the basic layer 14 through an oven or heating device 24 which may heat and harden and retain the acrylic resin layers 15 on the outer portion of the basic layer 14, in order to form a sheet material 1 (FIGS. 4, 5) that may then be used for making the planar layers 13 of the planar member 10. The sheet material 1 is then engaged on another roll 25 by such as a motorized device (not shown) for storing purposes and for being opened to make the planar layers 13 of the planar member 10 later.

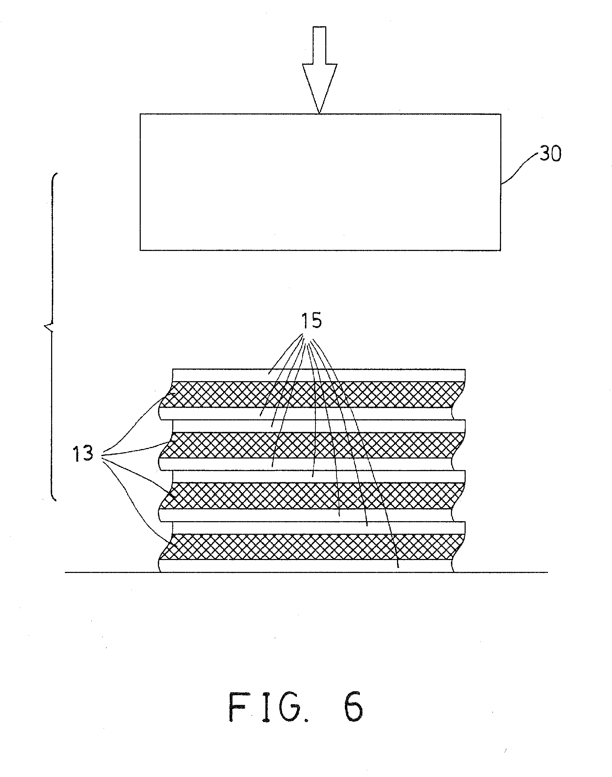

For example, as shown in FIG. 5, the sheet material 1 may be opened to make the planar layers 13 of the planar member 10 by such as punching or stamping processes, and the planar layers 13 may be punched or cut or formed into any required shape or configuration or contour, such as a shoe sole as shown in FIGS. 2 and 5, and may then be superposed with each other as shown in FIG. 6, and may then be solidly secured together with such as a heating or hot-pressing device 30 which may heat and melt the acrylic resin layers 15 in order to solidly secure the planar layers 13 together. It is to be noted that the poly amide basic layer 14 is flexible and strong and may suitably fit the feet of the user, the thickness of each planar layer 13 is preferably controlled or arranged between 0.4mm to 0.7mm, and the thickness of the planar member 10 is preferably controlled or arranged around 2mm, and preferably controlled or arranged between 0.8mm to 5mm.

It is preferable that the bottom surface or layer 11 and/or the upper surface or layer 12 is made of woven or nonwoven cloth materials or made of plastic or film or membrane materials and engaged with the acrylic resin layers 15 for covering the acrylic resin layers 15 and for preventing the acrylic resin layers 15 from engaging with the skin of the users and/or for preventing the acrylic resin layers 15 from sticking onto the skin of the users or for preventing the acrylic resin layers 15 from being directly contacting with the skin of the users. The acrylic resin layers 15 are also flexible and strong and may suitably fit the shape or the configuration or the contour of the feet of the user. After testing, four planar layers 13 of the planar member 10 may include an anti-piercing strength up to about 76kg, and two planar layers 13 of the planar member 10 may include an anti-piercing strength up to about 30kg.

After testing, the anti-piercing strength for different numbers of the planar layers 13 of the planar member 10 may have the testing results as follows:

| Thickness (mm) | Number of layers | anti-piercing strength (kg) |
|---|---|---|
| 1.1 | 2 | 31.6 |
| 1.7 | 3 | 62 |
| 2.2 | 4 | 75.5 |
| 2.7 | 5 | 98.3 |
| 3.2 | 6 | 110.3 |
| 3.7 | 7 | 130.6 |

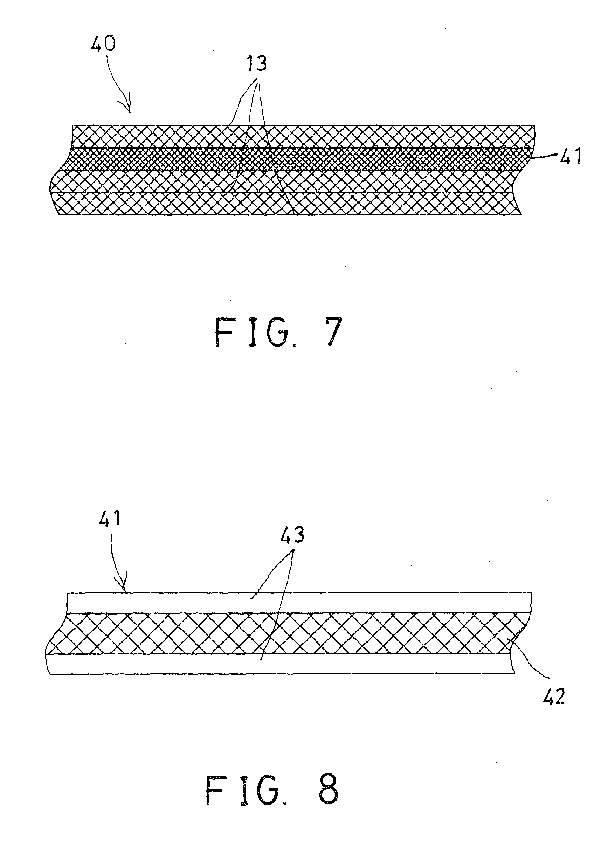

Alternatively, as shown in FIGS. 7 and 8, the planar member 40 may include one or more (such as three) planar layers 13, and one or more reinforcing layers 41 disposed or engaged between the planar layers 13, and the reinforcing layers 41 each may also include a basic layer 42 formed by such as a fiber cloth which may be made of or may be selected from polyethylene terephthalate materials, polybutylene terephthalate materials, polytrimethylene terephthalate materials, or other polymer terephthalate materials, or the combination thereof, and two acrylic resin layers 43 applied or attached or engaged onto the outer portion of the basic layer 42. It is preferable that the proportion of the number of the planar layers 13 to the number of the reinforcing layers 41 is equals to or greater than three (3). The planar members 10, 40 may be used for making various objects, such as shoe soles, coats, gloves, mopping clothes, bags, suitcases or the like.

It is to be noted that the planar members 10, 40 include an excellent flexibility or may be bent and will not be quickly recovered or bounced back right away to the original planar structure after bending such that the user will not be tired and may feel uncomfortable, and the ankles of the users will not be twisted.

## Claims

1. A planar member comprising:
a first planar layer and at least one second planar layer secured together, the first planar layer and the second planar layer each including a basic layer, and an acrylic resin layer engaged onto an outer portion of the basic layer.

2. A planar member as claimed in claim 1, wherein the first planar layer and the second planar layer each include a thickness arranged between 0.4mm to 0.7mm.

3. A planar member as claimed in claim 1, wherein the planar member includes a thickness arranged between 0.8mm to 5mm

4. A planar member as claimed in claim 1, wherein the basic layer is formed by a fiber cloth which is made of poly amide materials and selected from Nylon 4, Nylon 6, Nylon 11, Nylon 66, Nylon 610, or the combination thereof.

5. A planar member as claimed in claim 1, wherein a bottom layer is engaged with the acrylic resin layer for covering the acrylic resin layer and for preventing the acrylic resin layer from engaging with the user.

6. A planar member as claimed in claim 1, wherein an upper layer is engaged with the acrylic resin layer for covering the acrylic resin layer and for preventing the acrylic resin layer from engaging with the user.

7. A planar member as claimed in claim 1, wherein at least one reinforcing layer is engaged between the first and the second planar layers.

8. A planar member as claimed in claim 7, wherein a proportion of a number of the planar layers to a number of the reinforcing layer is equals to three (3).

9. A planar member as claimed in claim 7, wherein a proportion of a number of the planar layers to a number of the reinforcing layer is greater than three (3).

10. A planar member as claimed in claim 7, wherein the reinforcing layer is formed by a fiber cloth which is made of polyethylene terephthalate materials, polybutylene terephthalate materials, polytrimethylene terephthalate materials, or the combination thereof.

11. A planar member as claimed in claim 1, wherein the planar member includes an anti-piercing strength more than 30kg.

12. A method for making a planar member comprising:
providing a basic layer made of poly amide materials,
engaging the basic layer through an acrylic resin for applying the acrylic resin onto the basic layer and for forming a sheet material,
cutting the sheet material into a first planar layer and at least one second planar layer,
hot-pressing and securing the first planar layer and the second planar layer together for forming the planar member.

13. A method for making a planar member comprising:
providing a basic layer made of poly amide materials,
engaging the basic layer through an acrylic resin for applying the acrylic resin onto the basic layer,
providing a reinforcing layer made of polymer terephthalate materials,
engaging the reinforcing layer through an acrylic resin for applying the acrylic resin onto the reinforcing layer,
cutting the reinforcing layer into a first planar layer,
cutting the basic layer into at least one second planar layer,
hot-pressing and securing the first planar layer and the second planar layer together for forming the planar member.

14. A planar member as claimed in claim 13, wherein a proportion of a number of the planar layers to a number of the reinforcing layer is equals to three (3).

15. A planar member as claimed in claim 13, wherein a proportion of a number of the planar layers to a number of the reinforcing layer is greater than three (3).

16. A planar member substantially as herein described with reference to the accompanying drawings.
